**Europäisches Patentamt**

**European Patent Office**

**Office européen des brevets**

(19)

(11) Veröffentlichungsnummer: **0 173 296**
**B1**

(12) **EUROPÄISCHE PATENTSCHRIFT**

(45) Veröffentlichungstag der Patentschrift:
**11.05.88**

(51) Int. Cl.⁴: **F 02 F 1/42**

(21) Anmeldenummer: **85110743.3**

(22) Anmeldetag: **27.08.85**

(54) **Zylinderkopf einer flüssigkeitsgekühiten Diesel-Brennkraftmaschine.**

(30) Priorität: **28.08.84 DE 3431494**

(43) Veröffentlichungstag der Anmeldung:
**05.03.86 Patentblatt 86/10**

(45) Bekanntmachung des Hinweises auf die Patenterteilung:
**11.05.88 Patentblatt 88/19**

(84) Benannte Vertragsstaaten:
**CH DE FR GB IT LI NL**

(56) Entgegenhaltungen:
**DD - A - 214 894**
**GB - A - 2 081 809**
**US - A - 3 832 983**

(73) Patentinhaber: **Klöckner-Humboldt-Deutz Aktiengesellschaft,**
**Deutz-Mülheimer-Strasse 111 Postfach 80 05 09,**
**D-5000 Köln 80 (DE)**

(72) Erfinder: **Bauer, Lothar, Am Hirschsprung 2,**
**D-5000 Köln 91 (DE)**
Erfinder: **Schleiermacher, Herbert, Am Hülderberg 13,**
**D-5040 Brühl (DE)**
Erfinder: **Stadler, Hans, Dipl.-Ing., Burgstrasse 28,**
**D-5060 Bergisch Gladbach 3 (DE)**

ACTORUM AG

## Beschreibung

Die Erfindung bezieht sich auf einen Zylinderkopf einer flüssigkeitsgekühlten Diesel-Brennkraftmaschine, mit zwei nebeneinander angeordneten hängenden Einlassventilen, deren Einlasskanäle im wesentlichen parallel zueinander verlaufen und einen gemeinsamen Anschlussstutzen für die Luftleitung aufweisen, der seinerseits an der Seitenwand des Zylinderkopfes sitzt, wobei die Einspritzdüse für den Kraftstoff im Zylinderkopfzentrum angeordnet ist. Ein derartiger Zylinderkopf ist aus der GB-A-2 081 809 bekannt.

Es ist aus der DE-A-1 426 103 ein Zylinderkopf für eine Diesel-Brennkraftmaschine genannter Art bekanntgeworden, wobei die beiden Einlassventile in der Zuführungsrichtung der von einer Seitenwand des Zylinderkopfes herangeführten Verbrennungsluft hintereinander liegen. Die Einlasskanäle verlaufen durch eine Wand getrennt voneinander parallel in Richtung der Einlassventile. Einer der zwei Einlasskanäle ist zwischen den beiden Stossstangen der Ventilbetätigung hindurchgeführt. Dabei sind die Einlasskanäle so geführt, dass beide Einlassströmungen gleichrichtet sind. Die Kraftstoff-Einspritzdüse ist schräg zur Zylinderachse im Zylinderkopfzentrum angeordnet, und der Kraftstoff wird von aussen durch eine Leitung an die Düse herangeführt. Bei einer solchen Kraftstoffzuführung sind jedoch relativ lange Kraftstoffleitungen zwischen der Einspritzpumpe und der entsprechenden Einspritzdüse erforderlich.

Der Erfindung liegt die Aufgabe zugrunde, den vorgenannten Nachteil zu vermeiden und einen Zylinderkopf der eingangs umrissenen Art zu schaffen, der unter den genannten Voraussetzungen eine möglichst kurze Hochdruckleitung zwischen der Einspritzpumpe und der Einspritzdüse aufweist und bei dem die Zuführung der Verbrennungsluft und des Kraftstoffes von einer Seitenwand des Zylinderkopfes aus erfolgt.

Die Aufgabe wird erfindungsgemäss dadurch gelöst, dass die Hochdruckleitung für den Kraftstoff von der den Anschlussstutzen für die Luftleitung aufweisenden Seitenwand des Zylinderkopfes in einer eingegossenen Führung zwischen beiden Einlassventilen hindurch zur Einspritzdüse im Zylinderkopfzentrum verläuft und dass der Anschlussstutzen für die Luftleitung seitlich versetzt neben dem Anschluss für die Hochdruckleitung angeordnet ist.

Bei einer solchen Ausbildung verläuft die Hochdruckleitung auf kürzestem Wege von ihrer Eintrittsstelle an der Stirnseite des Zylinderkopfes radial zur Einspritzdüse und kreuzt dabei im Zylinderkopf einen der beide Einlasskanäle für die Verbrennungsluft.

In Weiterbildung der Erfindung überquert die von der Seitenwand des Zylinderkopfes zum Zylinderkopfzentrum radial verlaufende Hochdruckleitung den einen Einlasskanal für die Verbrennungsluft.

Zur räumlichen Unterbringung des Anschlussstutzens ist es zweckdienlich, wenn der äussere Einlasskanal die diesseitige Begrenzung des Zylinderkopfes im Bereich des Anschlussstutzens seitlich überkragt, wobei für beide Einlasskanäle ein kreisrunder Stutzen für den Anschluss der Luftleitung vorgesehen ist.

Nach einer bevorzugten Ausgestaltung der Erfindung dienen die dem Zylinerkopfzentrum zugewandten Einlasskanalseitenwände in Verbindung mit der darüber angeordneten eingegossenen Führung die Hochdruckleitung unter Einbeziehung von Kühlflüssigkeitsräumen zur Abstützung des Zylinderkopfbodens.

Schliesslich ist es bei der gegebenen Anordnung der Hochdruckleitung und des Anschlussstutzens für die Luftleitung vorteilhaft, wenn die beiden Einlasskanäle in ihrem Verlauf vom Anschlussstutzen zu den beiden Einlassventilen als Drallkanäle ausgebildet sind.

Ein Ausführungsbeispiel der Erfindung wird im folgenden anhand der Zeichnung näher beschrieben. Es zeigt:

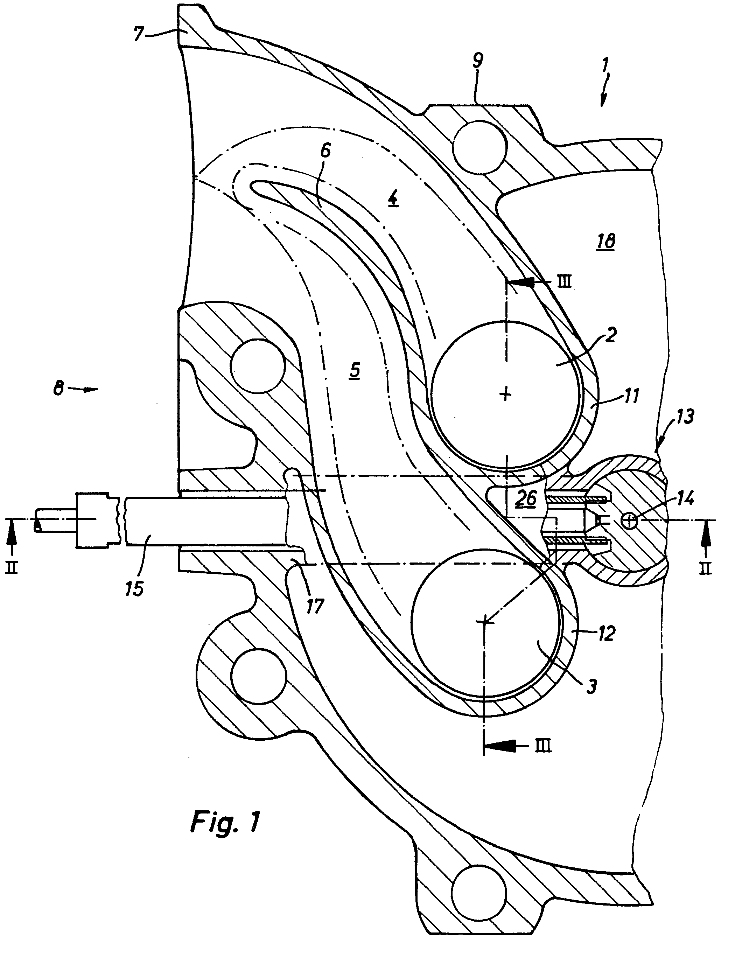

Fig. 1 einen Schnitt durch den Zylinderkopf gemäss der Erfindung nach der Linie I-I in Fig. 2;

Fig. 2 einen Schnitt durch den Zylinderkopf nach der Linie II-II in Fig. 1;

Fig. 3 einen Schnitt durch den Zylinderkopf nach der Linie III-III in Fig. 1.

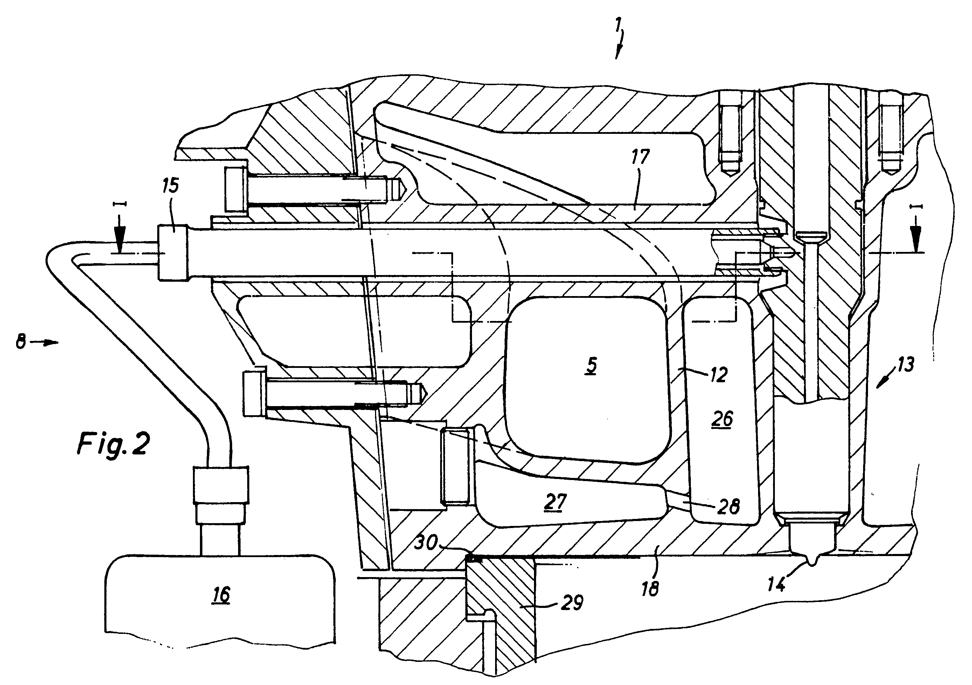

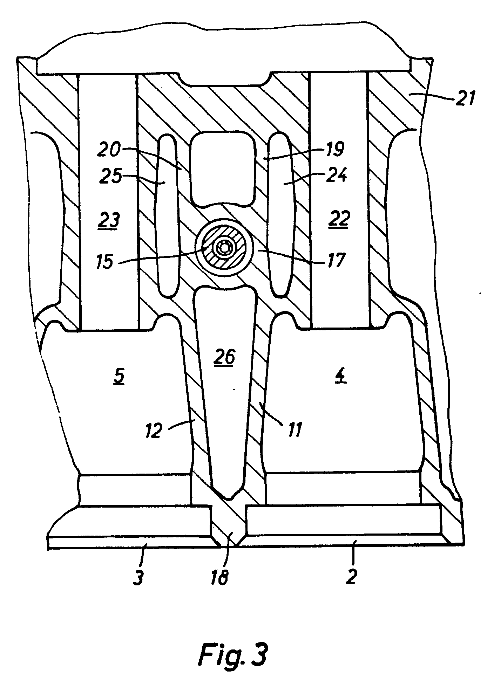

In einem Zylinderkopf 1 einer Diesel-Brennkraftmaschine sind zwei Einlassventile 2 und 3 für die Verbrennungsluft angeordnet, die mit je einem Einlasskanal 4 bzw. 5 für die getrennte Zuführung der über eine Luftleitung herangeführten Verbrennungsluft in Verbindung stehen. Eine die beiden Einlasskanäle 4, 5 trennende Wand 6 reicht von den Einlassventilen 2, 3 bis nahe an einen Anschlussstutzen 7 für eine nicht dargestellte Luftleitung. Der Anschlussstutzen 7, dessen Flansch kreisrund ausgebildet ist, befindet sich an einer Seitenwand 8 des Zylinderkopfes 1 in einer aussermittigen Lage. Dabei überkragt der Anschlussstutzen 7 teilweise die stirnseitige Begrenzungsfläche 9 des Zylinderkopfes 1. Die beiden Einlasskanäle 4 und 5 sind als Drallkanäle ausgebildet, so dass die von ihnen geführten Luftströme in einer bestimmten gleichgerichteten Strömung durch die Einlassventile 2, 3 in den Zylinder gelangen. Zum Zylinderkopfzentrum hin begrenzende Wände der beiden Einlasskanäle 4 und 5, die Y-förmig in die die beiden Einlasskanäle 4, 5 trennende Wand 6 übergehen, sind mit 11 und 12 bezeichnet. Im Zylinderkopfzentrum 13 ist in der vertikalen Zylinderachse eine Einspritzdüse 14 angeordnet. Für die Zuführung des Kraftstoffes zur Einspritzdüse 14 dient eine Hochdruckleitung 15, die oberhalb einer an der Seitenwand 8 des Zylinderkopfes sitzenden Einzeleinspritzpumpe 16 horizontal zur Einspritzdüse 14 im Zylinderkopfzentrum 13 führt. Die Hochdruckleitung 15 sitzt innerhalb des Zylinderkopfes 1 in einer eingegossenen Führung 17, die gemäss der Fig. 2 und 3 in Verbindung mit den darunter verlaufenden Wänden 11 und 12 der Einlasskanäle 4 bzw. 5 verbunden ist und zur Abstützung des Zylinderkopfbodens 18 dient. Dabei ist nach Fig. 3 die eingegossene Führung 17 durch oberhalb derselben gelegene und mit dieser einstückig gegossene Wände 19, 20 nach oben zur Zylinderkopfdeckplatte 21 hin abgestützt. Zwischen der Führung 17 für die Hochdruckleitung 15 und den beiderseits dazu verlaufenden Ventilführungen 22 und 23 sind Kühlflüssigkeitsräume 24 bzw. 25 angeordnet. Ferner ist im Bereich der Einlasskanäle 4 und 5 nahe dem Zylinderkopfzentrum 13 ein Kühlflüssigkeitsraum 26 und unterhalb des Einlasskanals 5 zwischen diesem und dem Zylinderkopfboden 18 ein Kühlflüssigkeitsraum 27 angeordnet, welcher über einen örtlichen Durchbruch 28 in Wirkverbindung mit dem Kühlwasserraum 26 steht. Die genannten Kühlflüssigkeitsräume 24 bis 27 sind selbstverständlich an den Kühlflüssigkeitskreislauf der Brennkraftmaschine angeschlossen.

Die einseitig zur Zylinderkopfmitte versetzte Lage des Anschlussstutzens 7 für die Einlasskanäle 4 und 5 ergibt die Möglichkeit, diese wahlweise als Saugkanäle oder auch als Drallkänale auszubilden. Der durch die seitlich versetzte Anordnung des Anschlussstutzens 7 an der Seitenwand 8 des Zylinderkopfes 1 vorhandene Bauraum wird zur Unterbringung der Einzeleinspritzpumpe 16 genutzt. Hierdurch ist die Möglichkeit gegeben, die Hochdruckleitung 15 für den Kraftstoff in unmittelbarer Nachbarschaft der Einspritzpumpe 16 in den Zylinderkopf 1 einzuleiten, so dass die Hochdruckleitung 15 in vorteilhafter Weise extrem kurz bemessen sein kann.

Die bis nahe an den Anschlussflansch 7 herangeführte, die Einlasskanäle 4 und 5 trennende Wand 6, kann z.B. so ausgebildet werden, dass sie zur Einleitung der Zylinderkopfschraubenkräfte auf die zwischen Zylinderkopfboden 18 und Zylinderlaufbuchsenkragen 29 angeordnete Zylinderkopfdichtung 30 herangezogen werden kann.

**Patentansprüche**

1. Zylinderkopf (1) einer flüssigkeitsgekühlten Diesel-Brennkraftmaschine, mit zwei nebeneinander angeordneten hängenden Einlassventilen (2, 3), deren Einlasskanäle (4, 5) im wesentlichen parallel zueinander verlaufen und einen gemeinsamen Anschlussstutzen (7) für die Luftleitung aufweisen, der seinerseits an der Seitenwand (8) des Zylinderkopfes (1) sitzt, wobei die Einspritzdüse (14) für den Kraftstoff im Zylinderkopfzentrum (13) angeordnet ist, dadurch gekennzeichnet, dass die Hochdruckleitung (15) für den Kraftstoff von der den Anschlussstutzen (7) für die Luftleitung aufweisenden Seitenwand (8) des Zylinderkopfes (1) in einer eingegossenen Führung (17) zwischen beiden Einlassventilen (2, 3) hindurch zur Einspritzdüse (14) im Zylinderkopfzentrum (13) verläuft und dass der Anschlussstutzen (7) für die Luftleitung seitlich versetzt neben dem Anschluss für die Hochdruckleitung (15) angeordnet ist.

2. Zylinderkopf nach Anspruch 1, dadurch gekennzeichnet, dass die von der Seitenwand (8) des Zylinderkopfes (1) zum Zylinderkopfzentrum (13) radial verlaufende Hochdruckleitung (15) den einen Einlasskanal (5) für die Verbrennungsluft überquert.

3. Zylinderkopf nach den Ansprüchen 1 und 2, dadurch gekennzeichnet, dass der äussere Einlasskanal (4) die diesseitige Begrenzungsfläche (9) des Zylinderkopfes (1) im Bereich des Anschlussstutzens (7) seitlich überkragt und dass für beide Einlasskanäle (4, 5) ein kreisrunder Stutzen für (7) den Anschluss der Luftleitung vorgesehen ist.

4. Zylinderkopf nach einem der vorhergehenden Ansprüche, dadurch gekennzeichnet, dass die dem Zylinderkopfzentrum (13) zugewandten Einlasskanalseitenwände (11, 12) in Verbindung mit der darüber angeordneten eingegossenen Führung (17) für die Hochdruckleitung (15) unter Einbeziehung von Kühlflüssigkeitsräumen (24, 25) zur Abstützung des Zylinderkopfbodens (18) dienen.

5. Zylinderkopf nach einem der vorhergehenden Ansprüche, dadurch gekennzeichnet, dass die beiden Einlasskanäle (4, 5) in ihrem Verlauf vom Anschlussstutzen (7) zu den beiden Einlassventilen (2, 3) als Drallkanäle ausgebildet sind.

**Claims**

1. A cylinder head (1) for a liquid-cooled diesel internal combustion engine, the cylinder head having two overhead intake valves (2, 3) arranged side-by-side, the intake ducts (4, 5) of which extend substantially parallel with one another and share a single connecting socket (7) for the air main, in which the connecting socket is located in a side wall (8) of the cylinder head (1) and the fuel-injecting nozzle (14) in the cylinder head's centre (13), characterised in that the high-pressure fuel pipe (15) extends from the cylinder head's (1) side wall (8) accommodating the connecting socket (7) for the air main in an integrally-cast guideway (17) between the two intake valves (2, 3) to the injection nozzle (14), and in that the connecting socket (7) for the air main is disposed, laterally offset, close to the connector for the high-pressure fuel pipe.

2. A cylinder head according to claim 1, characterised in that the high-pressure pipe (15) extending in radial direction from the side wall (8) of the cylinder head (1) to the latter's centre (13) passes over one (5) of the intake ducts.

3. A cylinder head according to claim 1 or claim 2, characterised in that the outermost intake duct (4) projects — in the region of the connecting socket (7) — sideways beyond the top face (9) of the cylinder head (1), and in that the two intake ducts (4, 5) are provided with the one, circular, connecting socket (7) for connecting them to the air main.

4. A cylinder head according to any of the preceding claims, characterised in that the intake ducts' side walls (11, 12) facing the cylinder head's centre (13) serve, together with the integrally-cast guideway (17) for the high-pressure pipe (15) arranged above them, to support the cylinder head's base (18) including coolant chambers (24, 25).

5. A cylinder head according to any of the preceding claims, characterised in that the two intake ducts (4, 5) are constructed along their extent between the connecting socket (7) and the two intake valves (2, 3) as swirl ducts.

**Revendications**

1. Tête de cylindre (1) d'un moteur à combustion interne Diesel refroidi par un liquide, avec deux soupapes d'admission (2, 3) suspendues l'une à côté de l'autre, dont les canaux d'admission (4, 5) s'étendent essentiellement parallèlement l'un à l'autre et comportent une tubulure de raccordement commune (7) pour la canalisation d'air qui, en ce qui la concerne, est placée contre la paroi latérale (8) de la tête de cylindre (1), tandis qu'une buse d'injection (14) pour le carburant, est disposée au centre (13) de la tête de cylindre, tête de cylindre caractérisée en ce que la canalisation haute pression (15) pour le carburant s'étend, à partir de la paroi latérale (8) de la tête de cylindre (1) comportant la tubulure de raccordement (7) pour la canalisation d'air, et en traversant un guidage venu de fonderie (17) entre deux soupapes d'admission (2, 3) vers la buse d'injection (14) au centre (13) de la tête de cylindre, tandis que la tubulure de raccordement (7), décalée latéralement, est disposée à côté du raccordement pour la canalisation haute pression (15).

2. Tête de cylindre selon la revendication 1, caractérisée en ce que la canalisation haute pression (15) s'étendant radialement de la paroi latérale (8) de la tête de cylindre (1) vers le centre (13) de la tête de cylindre, traverse l'un (5) des canaux d'admission pour l'air comburant.

3. Tête de cylindre selon les revendications 1 et 2, caractérisée en ce que le canal d'admission externe (4) fait saillie latéralement au-delà de la surface de délimitation (9), placée de son côté, de la tête de cylindre (1) au voisinage de la tubulure de raccordement (7), et qu'il est prévu pour les deux canaux d'admission (4, 5) une tubulure circulaire (7) pour le raccordement de la canalisation d'air.

4. Tête de cylindre selon l'une des précédentes revendications, caractérisée en ce que les parois latérales (11, 12) des canaux d'admission, tournées vers le centre (13) de la tête de cylindre, servent, en conjonction avec le guidage venu de fonderie (17), disposé au-dessus pour la canalisation haute pression (15) et avec intégration de chambres (24, 25) pour le liquide de refroidissement, à soutenir le fond (18) de la tête de cylindre.

5. Tête de cylindre selon une des précédentes revendications, caractérisée en ce que les deux canaux d'admission (4, 5) sur leur parcours de la tubulure de raccordement (7) aux deux soupapes d'admission (2, 3), sont des canaux à effet giratoire.

Fig. 1

Fig.2

*Fig. 3*